# EUROPEAN PATENT SPECIFICATION

(11) **EP 2 338 202 B1**
(45) Date of publication and mention of the grant of the patent: **22.07.2015**
(21) Application number: 09740925.4
(22) Date of filing: 07.10.2009
(51) Int. Cl.: H01M 8/24, H01M 8/04, H01M 8/10

(54) **FUEL CELL ASSEMBLY**
BRENNSTOFFZELLEN-BAUGRUPPE
ENSEMBLE PILE À COMBUSTIBLE

(30) Priority: 07.10.2008 GB 0818320
(43) Date of publication of application: 29.06.2011
(73) Proprietor: Intelligent Energy Limited, Leicestershire LE11 3GB (GB)
(72) Inventor: HOOD, Peter, David, Leicester LE7 2NN (GB); ARIKARA, Muralidharan, Folsom CA 95630 (US)
(74) Representative: Potter Clarkson LLP
(86) International application number: PCT/GB2009/002402
(87) International publication number: WO 2010/041013

(56) References cited:
- EP-A2- 1 515 383
- WO-A1-02/053402
- WO-A1-02/072252
- WO-A1-2006/022050
- WO-A1-2008/043838
- WO-A1-2009/127743
- WO-A2-01/71842
- WO-A2-03/034524
- GB-A- 2 442 252
- JP-A- 1 281 682
- JP-A- 2002 373 709
- JP-A- 2003 036 878
- JP-A- 2004 335 307
- US-A- 6 094 927

## Description

The invention relates to fuel cell assemblies, in particular to enclosures for mounting open cathode fuel cell stacks.

Conventional electrochemical fuel cells convert fuel and oxidant, generally both in the form of gaseous streams, into electrical energy and a reaction product. A common type of electrochemical fuel cell for reacting hydrogen and oxygen comprises a polymeric ion (proton) transfer membrane, with fuel and air being passed over each side of the membrane. Protons (i.e. hydrogen ions) are conducted through the membrane, balanced by electrons conducted through a circuit connecting the anode and cathode of the fuel cell. To increase the available voltage, a stack may be formed comprising a number of such membranes arranged with separate anode and cathode fluid flow paths. Such a stack is typically in the form of a block comprising numerous individual fuel cell plates held together by end plates at either end of the stack.

Because the reaction of fuel and oxidant generates heat as well as electrical power, a fuel cell stack requires cooling once an operating temperature has been reached. Cooling may be achieved by forcing air through the cathode fluid flow paths. In an open cathode stack, the oxidant flow path and the coolant path are the same, i.e. forcing air through the stack both supplies oxidant to the cathodes and cools the stack.

In order to integrate a fuel cell stack with other equipment for the stack to provide power to, the stack may be provided as an integrated assembly, having integrated air and fuel lines and electrical outlet connections. The assembly requires coolant paths, which may be the same or different to the oxidant flow paths, typically provided by manifolds leading to and from the stack. Particular care needs to be taken on how the air flow interfaces with the cathode flow paths, so that a uniform air flow and minimal pressure drop is achieved. Designing such manifolds can lead to increased complexity and cost of the operational unit.

A further complication is the need to design a different fuel cell assembly for each different application, since each application will tend to have its own power requirements in terms of required voltages and currents as well as space. Redesigning the assembly for each application can add considerably to the cost of each implementation.

JP 2003/036878 A discloses an air supply system for a fuel cell in which air is uniformly supplied to each unit of the fuel cell system using a centrifugal blower that is low in electric power consumption and extremely low in discharge pressure.

WO 02/053402 A1 discloses a fuel cell system that has at least one fuel cell module that is mounted on a vehicle. The fuel cell module is placed in or on the motor vehicle so that the fuel cell module operates in a largely self-aspirating manner when the vehicle is moving. This means that the air of the relative wind is sufficient for supplying oxidants to the fuel cells.

It is an object of the present invention to address one or more of the above mentioned problems.

In accordance with the invention there is provided a fuel cell assembly comprising:
an enclosure for mounting a fuel cell stack therein, the enclosure comprising an air flow path extending between an air inlet and an air outlet; and
a fuel cell stack having a plurality of cathode air coolant paths extending between a first face and an opposing second face of the stack,
wherein the fuel cell stack is mounted within the enclosure to provide a tapering air volume between the first face of the stack and a first side wall of the enclosure and between the second face of the stack and a second opposing side wall of the enclosure, and
an air deflector assembly provided between the air inlet and first face of the fuel cell stack;
wherein the air deflector assembly comprises a plurality of vanes arranged to direct air towards one or more portions of the inlet face of the fuel cell stack; and
wherein the plurality of vanes are arranged as one or more rotatable air deflector assemblies configured to rotate in response to air flowing through the air inlet to increase turbulence in the tapered air inlet volume.

An advantage of the fuel cell assembly according to the disclosure is that, because tapering air volumes are provided by the relative arrangement of the enclosure and the faces of the stack, specially designed manifolds are not required, thereby reducing the complexity and cost of the overall assembly.

Diagonally opposing edges of the stack can be sealed against the respective first and second opposing side walls of the enclosure, to allow for a sealed air flow path through the enclosure.

The enclosure may comprise an inlet air filter at a first end of the air flow path and an air exhaust at a second opposing end. This helps to reduce the overall height and width of the assembly. A reducing tapered section may be incorporated, extending from the inlet air filter to the first tapered air volume, to improve uniformity of air flow to the stack.

An increasing tapered section may also be provided extending from the second tapered air volume to the air exhaust, so as to improve air flow and reduce any pressure drop across the assembly.

A fan may be provided at the air exhaust for drawing air through the air flow path. The fan may alternatively be provided at the air inlet for blowing air through the air flow path.

The enclosure may have a substantially cuboid external shape, which allows multiple assemblies to be stacked on top of one another, for increasing the power available from the stacks.

The fuel-cell stack may be mounted within the enclosure at an angle of between 5 and 45 degrees to a longitudinal axis of the enclosure. This preferred range of angles allows for air flow to be uniformly distributed along the stack, while keeping the additional height required for the enclosure to a minimum. A particular preferred angle is around 8.5 degrees.

The fuel cell stack may in certain examples comprise a staggered array of planar fuel cells between opposing end plates laterally offset from one another. Alternatively, the stack may be substantially cuboid in shape, with the end plates in line with each other and the stack having a uniform cross-section between the end plates.

The fuel cell stack may alternatively have a cross-sectional shape in the form of a parallelogram

In preferred examples, including those where the cross-sectional shape of the stack is other than rectangular as well as those where the stack is substantially cuboid in shape, planar fuel cells making up the fuel cell stack are aligned parallel to the longitudinal axis of the enclosure. Aligning the cells parallel, rather than laterally, to the enclosure axis allows for a more uniform pressure distribution across stack, thereby ensuring that air flow through the stack is more uniform.

The fuel cell assembly optionally comprises an air recirculation duct extending between the air outlet and air inlet, the assembly comprising a retractable baffle adjacent the air outlet, the baffle being operable between a closed position and an open position in which a proportion of air passing through the second tapering air volume is redirected back towards the air inlet via the recirculation duct.

A modular fuel cell assembly may be constructed from a plurality of the fuel cell assemblies according to the invention, with the assemblies arranged in a regular array. The regular array may be a rectangular array.

The invention will now be described by way of example, and with reference to the enclosed drawings in which:
figure 1a is a cross-sectional view of an enclosure with a fuel cell stack mounted therein;
figure 1b is a plan view of the enclosure of figure 1a;
figure 2 is a cut-away perspective view of an enclosure with a fuel cell stack mounted therein;
figure 3 is a perspective view of the enclosure of figure 2;
figure 4 is a perspective view of a modular assembly of enclosures containing fuel cell stacks;
figure 5 is a perspective view of an alternative fuel cell stack;
figure 6 is a cross-sectional view of the alternative fuel cell stack of figure 5 mounted between opposing side walls of an enclosure;
figure 7 is a perspective partially transparent view of a further alternative form of fuel cell assembly;
figure 8 is a cross-sectional view of the further alternative form of fuel cell assembly:
figure 9 is an end elevation view of the further alternative form of fuel cell assembly;
figure 10 is a cross-sectional drawing of a further alternative example, having an air recirculation path in a closed / non-recirculating configuration;
figure 11 is a cross-sectional drawing of the further alternative example of figure 10, with the air recirculation path in a partially open/recirculating configuration;
figure 12 is a perspective drawing of a further alternative example, having a first type of air inlet deflector in the air inlet manifold;
figure 13 is a perspective drawing of a further alternative example, having a second type of air inlet deflector in the air inlet manifold;
figure 14 is a perspective drawing of a further alternative example, having a third type of air inlet deflector in the air inlet manifold together with an air outlet manifold;
figure 15a is a perspective drawing of an embodiment, having a fourth type of air inlet deflector in the air inlet manifold; and
figure 15b is a perspective drawing of a rotatable air deflector for use in the embodiment of figure 15a.

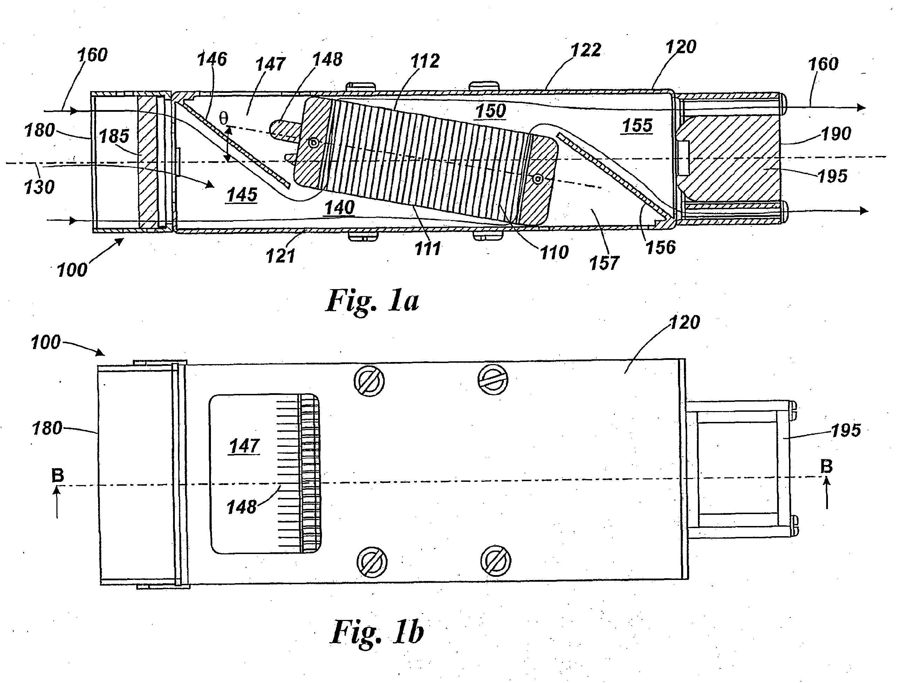

Shown in figure 1 a is a cross-sectional view of a fuel cell assembly 100 comprising a fuel cell stack 110 mounted within an enclosure 120. The stack 110 is mounted at an angle θ of preferably between 5 and 45 degrees to the longitudinal axis 130 of the enclosure 120, with a particular preferred angle being around 8.5 degrees. This mounting arrangement results in a first tapered air volume 140 between a first face 111 of the stack 110 and a first wall 121 of the enclosure, and a second tapered air volume 150 between a second face 112 of the stack 110 and a second wall 122 of the enclosure 120. The first and second tapered air volumes 140, 150 form part of an air flow path 160 between an air inlet 180 and an air exhaust 190 of the enclosure 120. A reducing tapered inlet manifold 145 extends between an air filter 185 at the air inlet and the first tapered air volume 140. An increasing tapered outlet manifold 155 extends between the second tapered air volume 150 and a fan 195 provided at the air exhaust 180. The fan 195 may alternatively be provided at the air inlet 180 to blow air through the enclosure 120.

The enclosure 120 may additionally provide part of the structure of the stack 110, for example taking the place of tie bolts that would otherwise be provided to clamp the end plates in position.

The tapered air volumes 140, 150 either side of the stack 110 act to reduce the pressure drop in the air flow path leading through the stack, and improves the distribution of air in the fuel cells making up the stack 110.

Cover plates 146, 156 may be provided in the enclosure 120 to form tapering inlet and outlet manifolds 145, 155 leading to and from the stack 110. The cover plates may be planar, as shown in figure 1a, or alternatively may be curved to form a desired shape of air flow path leading to and away from the stack 110. The cover plates 146, 156 are preferably sealed against diagonally opposing edges of the stack 110 and against the internal faces of the enclosure 120, in order to prevent leakage of air from the air flow coolant path 160. One or both of the cover plates 146, 156 may be formed as part of the cross-sectional shape of the enclosure 120. Further internal volumes 147, 157 provided by the cover plates 146, 156 could be used to contain other components of the fuel cell assembly, for example relating to electrical connections, and/or regulation of the fuel supply, to the stack 110. Internal volume 147 is additionally shown in figure 1b, beneath an opening in a face of the enclosure 120 provided to allow access to connections 148 on the fuel cell stack 110.

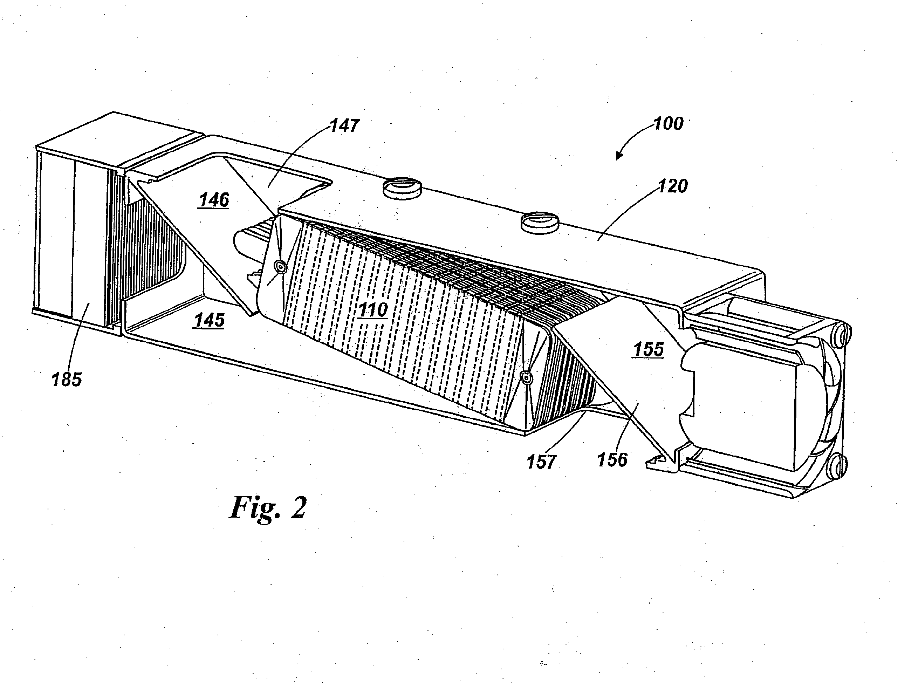

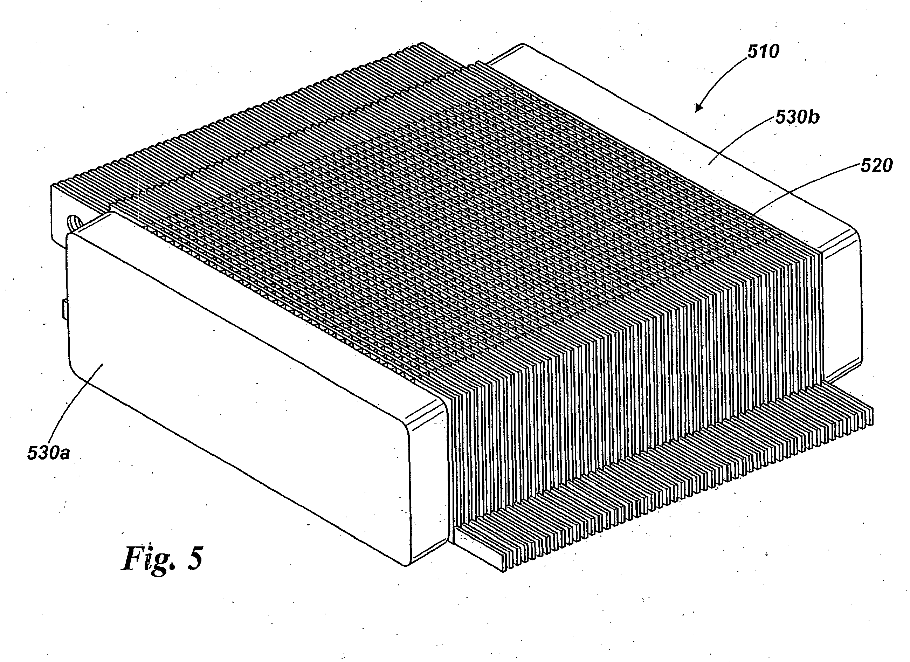

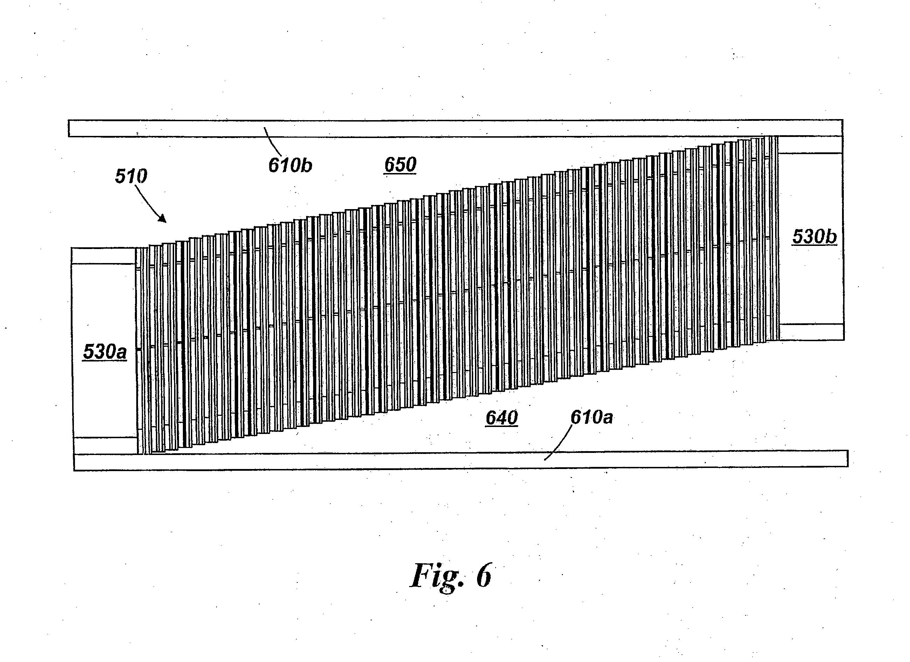

Air, which for an open cathode stack acts as both coolant and oxidant, enters the enclosure 120 through a filter 185 and into the tapered inlet manifold 145 before entering the first tapered air volume 140 leading to a first face 111 of the stack 110. The air passes through the stack 110 and out from the second face 112 into the second tapered volume 150 above the stack. The air then passes through the outlet manifold 155 and is drawn out of the enclosure through one or more fans 195. In order to ensure that a reasonably uniform air flow is provided through each of the cells making up the stack 110, the cells are preferably aligned to be parallel to the longitudinal axis 130 of the enclosure 120, as shown more clearly in figure 2. Other arrangements where the cells are aligned laterally to the longitudinal axis 13, as for example shown in figures 5 and 6, are however, also possible.

At least in relation to open cathode air-cooled fuel cell stacks, the layout shown in figures 1 a and 1 b allows for the total height and the overall volume of the fuel cell assembly to be reduced and allows for a more rugged package with a minimum number of components. Selection of the angle of the fuel cell stack 110 to the longitudinal axis of the enclosure allows for optimisation of the space used within the enclosure, both in terms of the inlet and outlet manifolds and the space required for other components.

Figure 2 shows a perspective cutaway view of the fuel cell stack 110 and enclosure 120, illustrating the cover plates 146, 156 forming the inlet and outlet manifolds 145, 155 and further volumes 147, 157.

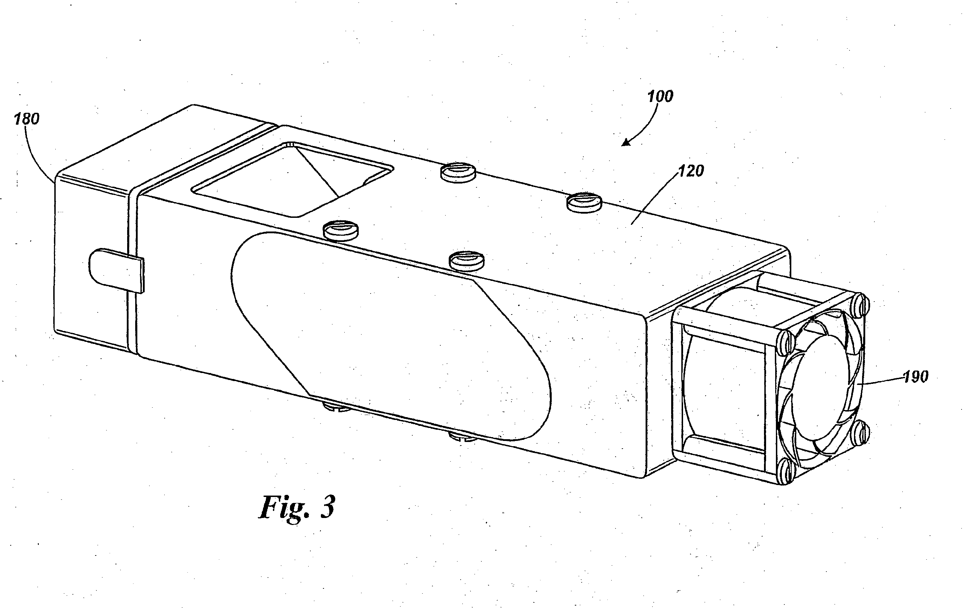

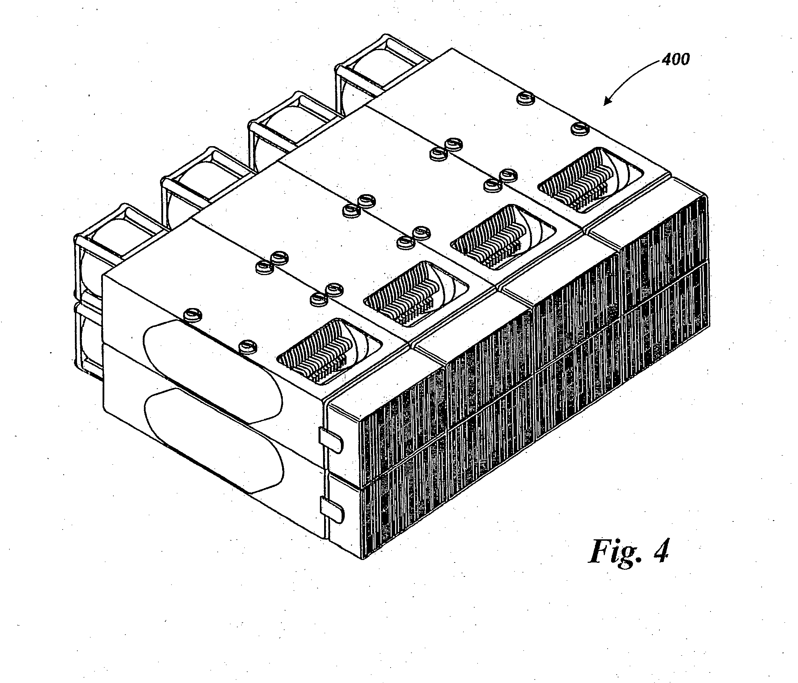

Figure 3 shows a perspective view of the assembled enclosure 120. The regular cuboid shape of the enclosure, in combination with the air inlet 180 and outlet 190 being provided at opposing ends of the enclosure 120, allows the fuel cell assembly 100 to be provided in a modular form, i.e. allowing a plurality of such fuel cell modules to be connected together physically and electrically. An exemplary arrangement of this is shown in the perspective view of such a modular assembly in figure 4, illustrating a rectangular array 400 of eight such modules. An advantage of such an array 400 is that manufacturing costs can be minimised across a range of applications requiring different levels of electrical power. Although the present invention is particularly suitable for open cathode air-cooled designs of fuel cell stacks, other fuel cell stacks where air flow through the stack is an important feature may be incorporated into an enclosure of the type described herein.

Shown in figure 5 is an alternative arrangement of a fuel cell stack 510. The stack 510 comprises a staggered array of fuel cells 520, with opposing parallel end plates 530a, 530b laterally offset from one another: The arrangement shown can thereby be mounted within an enclosure with the end plates 530a, 530b arranged orthogonally to opposing faces of the enclosure. The arrangement is shown in cross-sectional view in figure 6, with the end plates 530a, 530b shown in relation to side walls 610a, 610b of the enclosure, with tapered air volumes 640, 650 provided between the stack 510 and side walls 610a, 610b. Other components making up a fuel cell assembly with the arrangement shown in figures 5 and 6 may be similar to those illustrated in figures 1 a to 4.

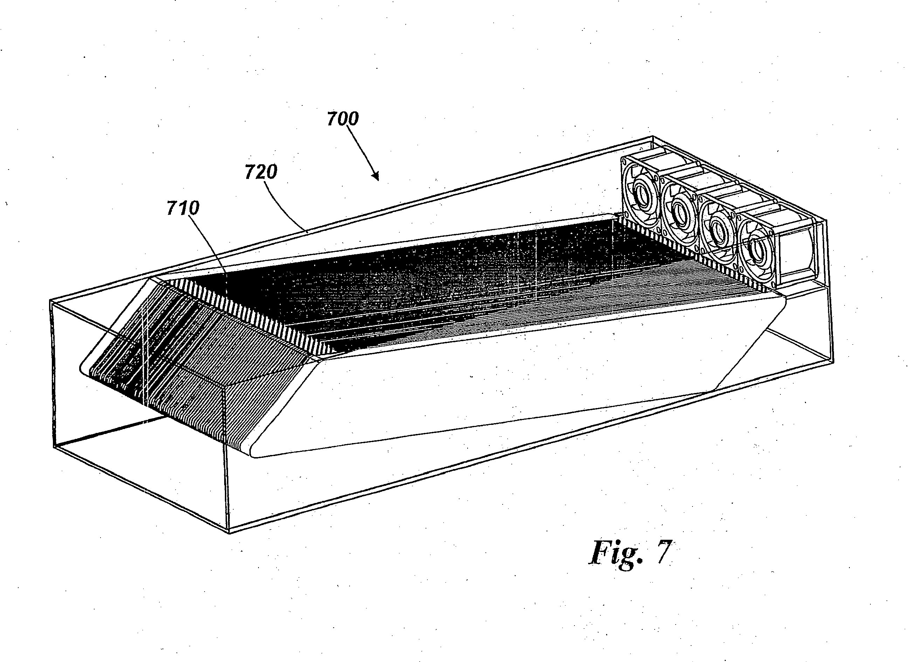

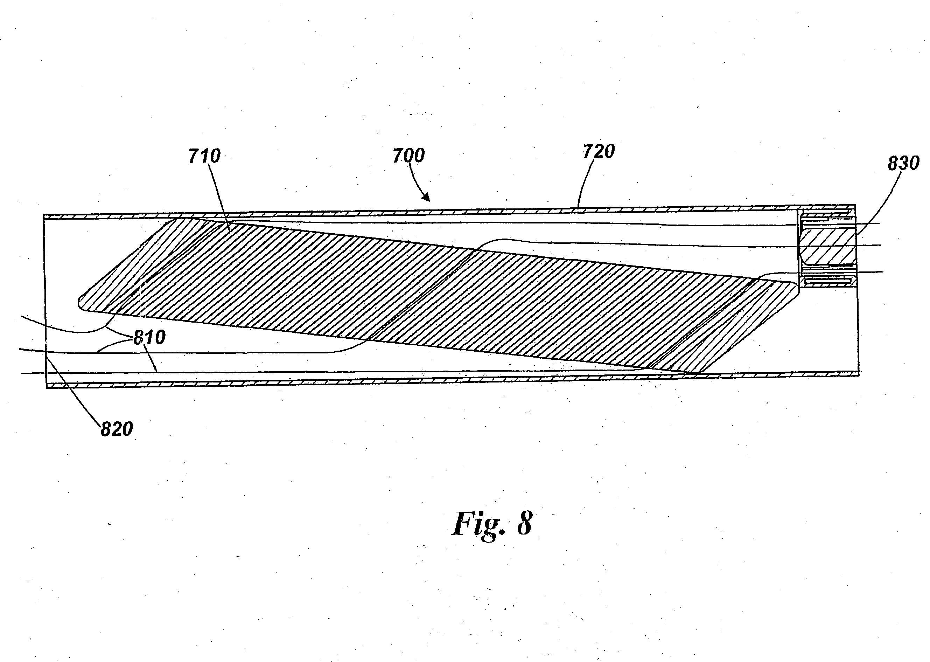

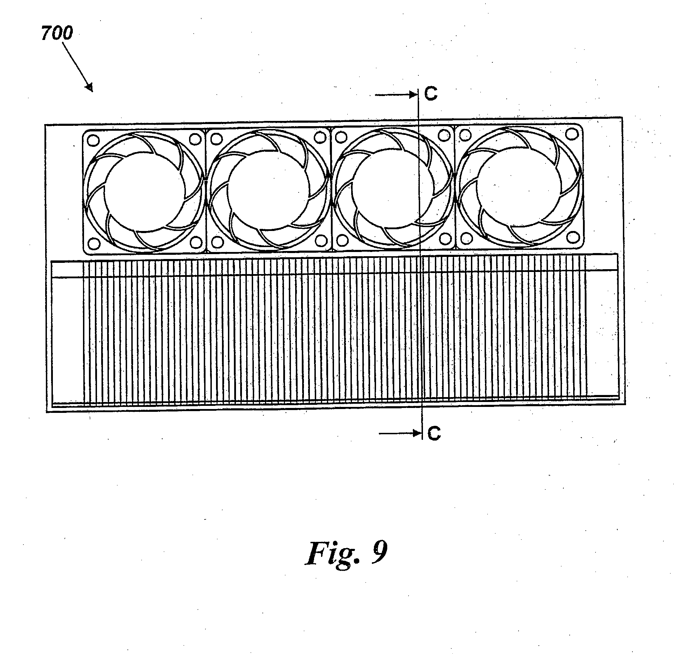

Figure 7 shows a further alternative form of fuel cell assembly 700, in which the fuel cell stack 710 has a cross-sectional shape in the form of a parallelogram, rather than the rectangular forms shown in figures 1 a and 2. Figure 8 shows a cross-sectional view through the fuel cell stack 710, in which the alignment of each of the individual fuel cell plates can be seen. The parallelogram form of the stack 710 allows the plates to be aligned towards the air flow direction through the enclosure, indicated by air flow paths 810, thereby aiming to reduce turbulence and pressure drop between the inlet 820 and outlet 830 of the enclosure 720. An outlet end elevation view of the fuel cell assembly 700 is shown in figure 9, indicating the section (C-C) through which figure 8 is taken.

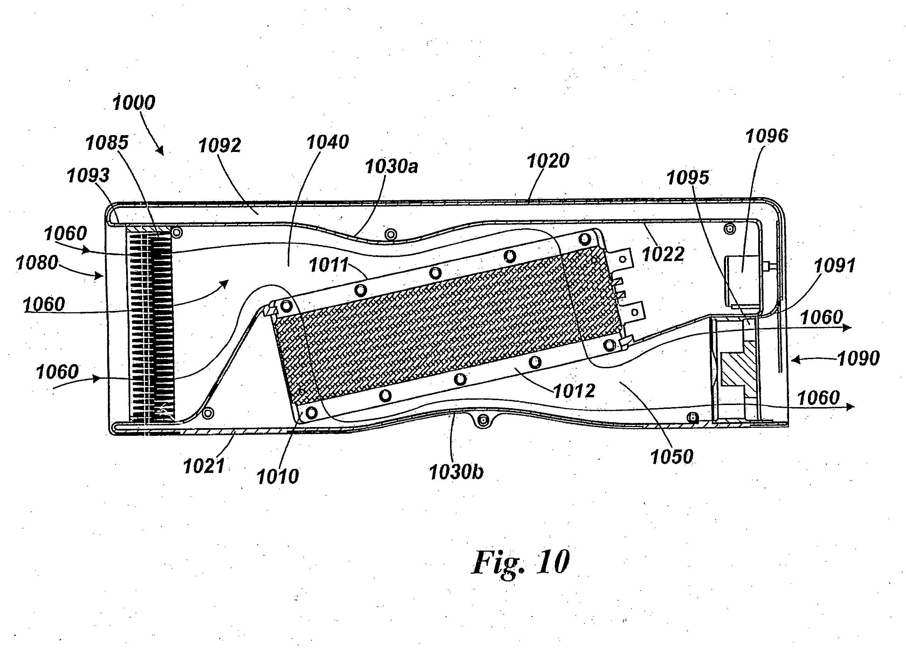

Figure 10 illustrates in cross-section a further alternative example of a fuel cell assembly 1000. The fuel cell stack 1010 is mounted and oriented within the enclosure 1020 in a similar way to the assemblies described above, but with some modifications to the form of the enclosure 1020 to improve air flow through the stack 1010 and allow for air recirculation when required. Air flow through the enclosure 1020 is indicated by arrows 1060, showing air entering the enclosure 1020 through an air inlet 1080 (optionally comprising an air filter 1085), through a tapering air inlet volume 1040, entering a first face 1011 of the stack 1010, exiting the stack 1010 through a second opposing face 1012 into a tapered air outlet volume 1050, and out from the enclosure 1020 through an air outlet 1090, optionally provided with a fan 1095. Different to the previously described examples, the air outlet 1090 cross-section in the example shown in figure 10 is smaller than that of the air inlet 1090 so as to allow for an air recirculation path, described in more detail below.

Flow correctors 1030a, 1030b are provided along opposing internal side walls 1021, 1022 of the enclosure 1020, the flow correctors facing opposing faces 1011, 1012 of the stack 1010. The flow correctors 1030a, 1030b are in the form of narrowed portions of the internat volume defined by the opposing internal side walls of the enclosure 1020, the flow correctors being configured to provide a further tapering of the air inlet volume 1040 and air outlet volume 1050 adjacent either face 1011, 1012 of the stack 1010. The effect of this further tapering is to redistribute air flow through the stack 1010 across the inlet and outlet faces 1011, 1012, allowing a more even distribution of air flow across the stack 1010.

An air recirculation path is provided in the assembly 1000, connecting the air outlet 1090 with the air inlet 1080 by means of a recirculation duct 1092. A retractable baffle 1091 is provided adjacent the air outlet 1090, the baffle 1091 being operable by means of a baffle actuator 1096 for actuating the baffle between a closed position, as shown in figure 10, and an open position in which a proportion of the air passing through the tapered air outlet volume 1050 is redirected back towards the air inlet 1080 via the recirculation duct 1092.

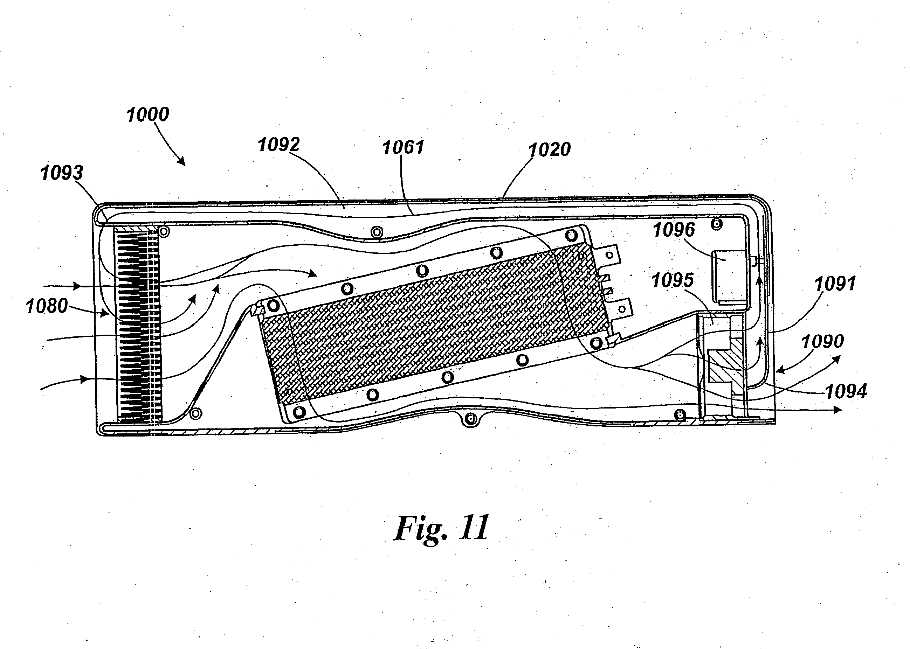

Figure 11 shows the assembly 1000 of figure 10 with the retractable baffle 1091 in a partially open position, causing a proportion of air to be recirculated through the recirculation duct 1092 (indicated by arrow 1061) towards the air inlet 1080. The recirculated air exits the recirculation duct 1092 through one or more holes 1093 provided adjacent the air inlet 1080, the holes 1093 being for example in the form of a series of perforations. In the configuration shown in figure 11, a portion of the retractable baffle 1091 extends across a face of the fan 1095 to force air into the recirculation duct 1092. The baffle 1091 is preferabiy slidably actuated across air outlet 1090, and comprises a curved end portion 1094 configured to direct air into the recirculation duct 1092.

One or more baffle actuators 1096 are provided to operate the baffle 1091 between the closed and open positions. The actuator 1096 may, for example, be a linear or rotary actuator, arranged to slidably actuate the baffle 1091 across the air outlet 1090.

With the baffle 1091 in the closed position shown in figure 10, air passes through the fuel cell stack and provides oxygen and cooling during normal operation. With the baffle in the open position shown in figure 11, recirculation of air through the recirculation duct 1092 allows air that has been heated by passing through the stack 1010 to further heat the stack, for example during a cold start-up procedure. Once a measured temperature of the stack reaches a desired threshold, the baffle 1091 can be caused to retract and allow for cooling of the stack. The baffle 1091 may also be operated in a partially open position, for example during a gradual transition from a cold start to normal operation.

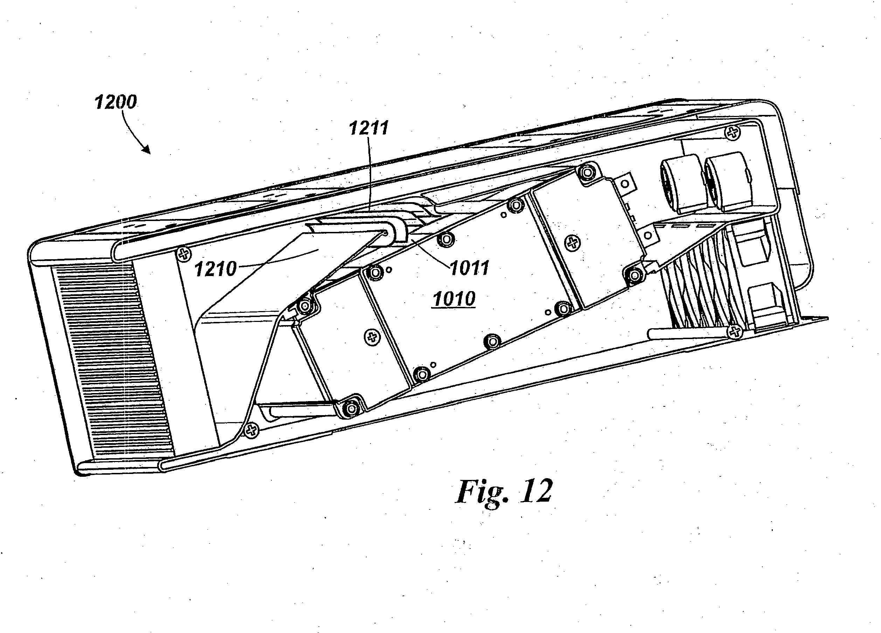

Shown in figure 12 is an alternative example similar to the assembly 1000 of figures 10 and 11, in which an air deflector assembly 1210 is provided within the tapered air inlet volume 1040 in place of the flow correctors 1030a, 1030b. The air deflector assembly comprises a plurality of curved vanes 1211 configured to redirect air from the tapered air inlet volume across the inlet face 1011 of the stack 1010, thereby redistributing air flow across the inlet face 1010.

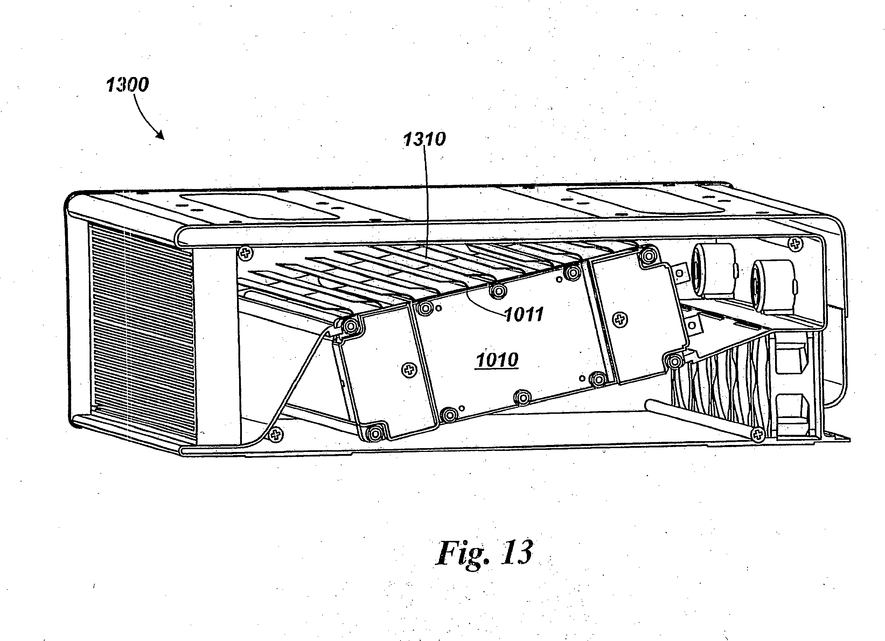

An alternative fuel cell assembly 1300 example is shown in figure 13, in which an air deflector assembly 1310 is provided in the form of a regular series of curved vanes across the inlet face 1011 of the stack 1010, the curved shape of the vanes being configured to deflect air flowing through the tapered air inlet volume towards portions of the face 1011 or the stack 1010.

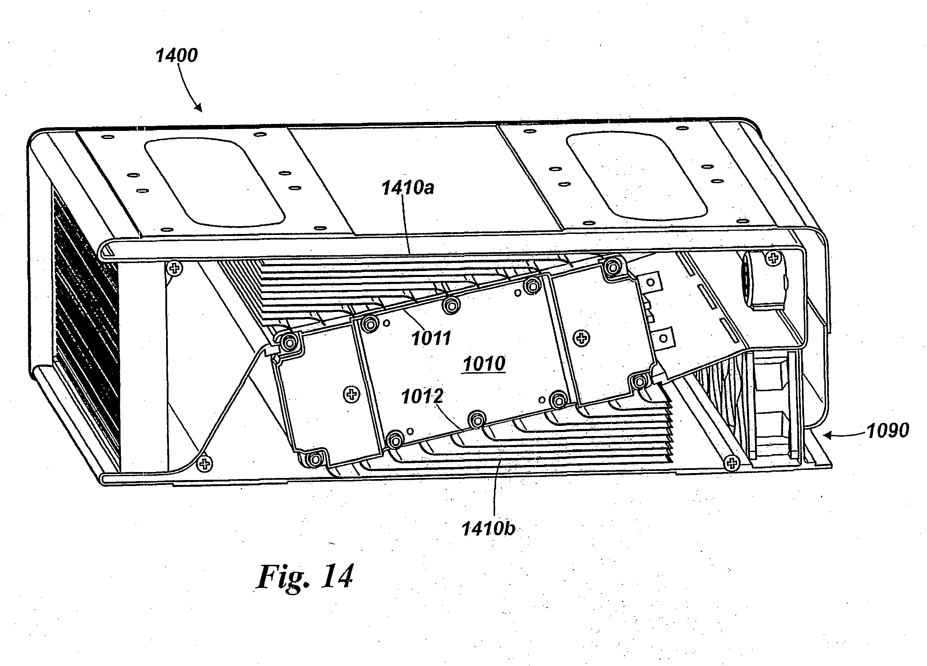

A further alternative fuel cell assembly example 1400 is shown in figure 14, in which a deflector assembly 1410a is provided in the form of a series of curved vanes providing multiple parallel flow paths between the air inlet and the first face 1011 of the stack 1010. A corresponding air deflector assembly 1410b is also optionally provided on the outlet face of the stack, providing multiple parallel flow paths between the outlet face 1012 of the stack 1010 and the air outlet 1090.

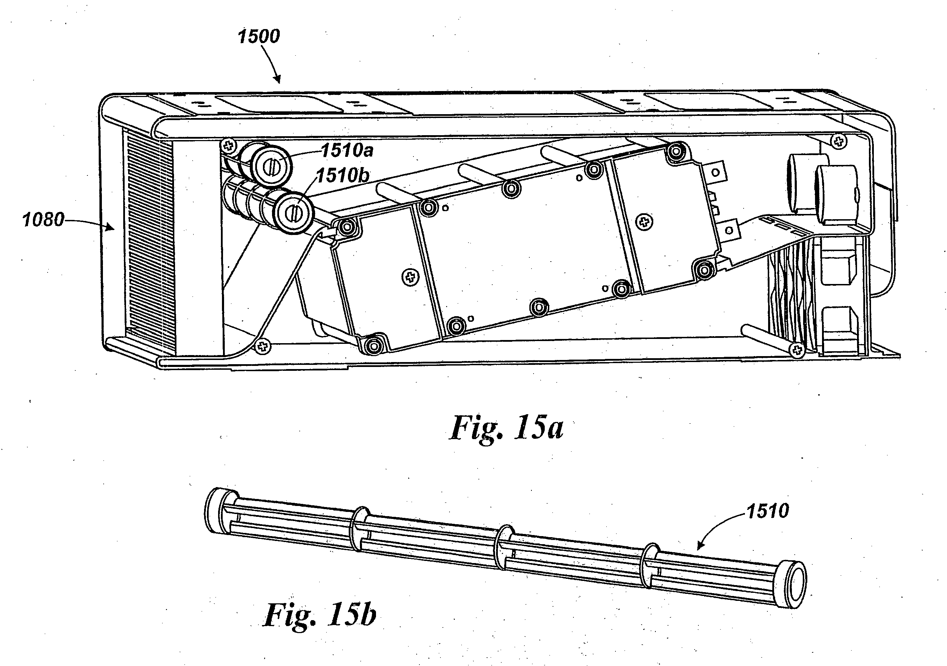

An alternative type of air deflector assembly is illustrated in the fuel cell assembly embodiment 1500 shown in figure 15a. The air deflector is in the form of one or more rotatable blade assemblies 1510a, 1510b, each assembly being configured to be driven by the incoming air stream from the air inlet 1080 so as to convert an inlet air flow from being relatively laminar to a more turbulent flow. Each blade assembly 1510a, 1510b is oriented such that the rotation axis is substantially orthogonal to the direction of air flow from the air inlet 1080. The more turbulent air flow in the tapered air inlet volume assists in reducing preferential air flow through particular channels in the stack. A further view of a single air deflector 1510 is shown in figure 15b, the deflector being in the form of a circular cylindrical element having a plurality of vanes extending longitudinally along the axis of the cylinder.

Other embodiments are intentionally within the scope of the invention as defined by the appended claims.

## Claims

1. A fuel cell assembly (100) comprising:
an enclosure (120) for mounting a fuel cell stack (110) therein, the enclosure comprising an air flow path (160) extending between an air inlet (180) and an air outlet (190);
a fuel cell stack (110) having a plurality of cathode air coolant paths extending between a first face (111) and an opposing second face (112) of the stack,
wherein the fuel cell stack is mounted within the enclosure to provide a first tapering air volume (140) between the first face (111) of the stack and a first side wall (121) of the enclosure and a second tapering air volume (150) between the second face (112) of the stack and a second opposing side wall (122) of the enclosure, and
an air deflector assembly (1510a, 1510b) provided between the air inlet (1080) and first face (1011) of the fuel cell stack;
wherein the air deflector assembly comprises a plurality of vanes (1211) arranged to direct air towards one or more portions of the inlet face (1011) of the fuel cell stack (1010); and
wherein the plurality of vanes (1211) are arranged as one or more rotatable air deflector assemblies (1510a, b) configured to rotate in response to air flowing through the air inlet (1080) to increase turbulence in the tapered air inlet volume (1040).

2. The fuel cell assembly of claim 1 wherein diagonally opposing edges of the stack (110) are sealed against the respective first and second opposing side walls of the enclosure (120).

3. The fuel cell assembly of claim 1 wherein the enclosure comprises an inlet air filter (185) at a first end of the air flow path and an air exhaust (190) at a second opposing end.

4. The fuel cell assembly of claim 3 comprising a reducing tapered section (145) extending from the inlet air filter (185) to the first tapered air volume (140).

5. The fuel cell assembly of claim 3 or claim 4 comprising a increasing tapered section (155) extending from the second tapered air volume (150) to the air exhaust (190).

6. The fuel cell assembly of any one of claims 3 to 5 comprising a fan (195) provided at the air exhaust (190) for drawing air through the air flow path.

7. The fuel cell assembly of any one of claims 1 to 6 wherein the enclosure has a substantially cuboid external shape.

8. The fuel cell assembly of any preceding claim wherein the fuel cell stack is mounted at an angle of between 5 and 45 degrees to a longitudinal axis of the enclosure.

9. The fuel cell assembly of any one of claims 1 to 7 wherein the fuel cell stack comprises a staggered array of planar fuel cells between opposing end plates laterally offset from one another.

10. The fuel cell assembly of any one of claims 1 to 7 wherein the fuel cell stack has a cross-sectional shape in the form of a parallelogram.

11. The fuel cell assembly of any preceding claim comprising an air recirculation duct (1092) extending between the air outlet (1090) and air inlet (1080), the assembly comprising a retractable baffle (1091) adjacent the air outlet (1090), the baffle (1091) being operable between a closed position and an open position in which a proportion of air passing through the second tapering air volume (1050) is redirected back towards the air inlet (1080) via the recirculation duct (1092).

12. A modular fuel cell assembly comprising a plurality of fuel cell assemblies according to any one of claims 1 to 11 arranged in a regular array, the array being optionally a rectangular array.

## Patentansprüche

1. Brennstoffzellenbaugruppe (100), umfassend:
ein Gehäuse (120) zum Montieren eines Brennstoffzellenstapels (110) darin, wobei das Gehäuse einen Luftstromweg (160) umfasst, der sich zwischen einem Lufteinlass (180) und einem Luftauslass (190) erstreckt;
einen Brennstoffzellenstapel (110) mit einer Mehrzahl von Kathodenluftkühlmittelwegen, die sich zwischen einer ersten Seitenfläche (111) und einer gegenüberliegenden zweiten Seitenfläche (112) des Stapels erstrecken,
wobei der Brennstoffzellenstapel so innerhalb des Gehäuses montiert ist, dass er ein erstes sich verengendes Luftvolumen (140) zwischen der ersten Seitenfläche (111) des Stapels und einer ersten Seitenwand (121) des Gehäuses und ein zweites sich verengendes Luftvolumen (150) zwischen der zweiten Seitenfläche (112) des Stapels und einer zweiten gegenüberliegenden Seitenwand (122) des Gehäuses bereitstellt, und
eine Luftablenkbaugruppe (1510a, 1510b), die zwischen dem Lufteinlass (1080) und der ersten Seitenfläche (1011) des Brennstoffzellenstapels vorgesehen ist;
wobei die Luftablenkbaugruppe eine Mehrzahl von Flügeln (1211) umfasst, die so angeordnet sind, dass sie Luft in Richtung eines Teils oder mehrerer Teile der Einlassseitenfläche (1011) des Brennstoffzellenstapels (1010) lenken; und
wobei die Mehrzahl von Flügeln (1211) als eine oder mehrere drehbare Luftablenkbaugruppen (1510a, b) angeordnet ist, die so ausgestaltet sind, dass sie sich als Reaktion auf durch den Lufteinlass (1080) strömende Luft drehen, um die Turbulenz in dem sich verengenden Lufteinlassvolumen (1040) zu erhöhen.

2. Brennstoffzellenbaugruppe nach Anspruch 1, wobei einander diagonal gegenüberliegende Kanten des Stapels (110) gegenüber der jeweiligen ersten und zweiten einander gegenüberliegenden Seitenwand des Gehäuses (120) abgedichtet sind.

3. Brennstoffzellenbaugruppe nach Anspruch 1, wobei das Gehäuse einen Einlassluftfilter (185) an einem ersten Ende des Luftstromwegs und einen Luftauslass (190) an einem zweiten gegenüberliegenden Ende umfasst

4. Brennstoffzellenbaugruppe nach Anspruch 3, die einen sich verkleinernden sich verengenden Abschnitt (145) umfasst, der sich vom Einlassluftfilter (185) zu dem ersten sich verengenden Luftvolumen (140) erstreckt.

5. Brennstoffzellenbaugruppe nach Anspruch 3 oder Anspruch 4, die einen sich vergrößernden sich verengenden Abschnitt (155) umfasst, der sich von dem zweiten sich verengenden Luftvolumen (150) zum Luftauslass (190) erstreckt.

6. Brennstoffzellenbaugruppe nach einem der Ansprüche 3 bis 5, die einen am Luftauslass (190) vorgesehenen Lüfter (195) zum Saugen von Luft durch den Luftstromweg umfasst.

7. Brennstoffzellenbaugruppe nach einem der Ansprüche 1 bis 6, wobei das Gehäuse eine im Wesentlichen würfelförmige äußere Form aufweist.

8. Brennstoffzellenbaugruppe nach einem vorangehenden Anspruch, wobei der Brennstoffzellenstapel in einem Winkel zwischen 5 und 45 Grad zu einer Längsachse des Gehäuses montiert ist.

9. Brennstoffzellenbaugruppe nach einem der Ansprüche 1 bis 7, wobei der Brennstoffzellenstapel eine versetzte Anordnung planer Brennstoffzellen zwischen seitlich gegeneinander versetzten einander gegenüberliegenden Endplatten umfasst.

10. Brennstoffzellenbaugruppe nach einem der Ansprüche 1 bis 7, wobei der Brennstoffzellenstapel eine Querschnittsform in Form eines Parallelogramms aufweist.

11. Brennstoffzellenbaugruppe nach einem vorangehenden Anspruch, die eine Luftrückführleitung (1092) umfasst, die sich zwischen dem Luftauslass (1090) und dem Lufteinlass (1080) erstreckt, wobei die Baugruppe benachbart zum Luftauslass (1090) eine zurückziehbare Umlenkplatte (1091) umfasst, wobei die Umlenkplatte (1091) zwischen einer geschlossenen Position und einer offenen Position, in der ein Teil der das zweite sich verengende Luftvolumen (1050) passierenden Luft über die Rückführleitung (1092) in Richtung des Lufteinlasses (1080) zurückgeführt wird, betätigbar ist.

12. Modulare Brennstoffzellenbaugruppe, die eine Mehrzahl von in einer regelmäßigen Anordnung angeordneten Brennstoffzellenbaugruppen nach einem der Ansprüche 1 bis 11 umfasst, wobei die Anordnung optional eine rechteckige Anordnung ist.

## Revendications

1. Ensemble de piles à combustible (100) comprenant :
une enceinte (120) pour y monter un empilement de piles à combustible (110), l'enceinte comprenant un chemin d'écoulement d'air (160) s'étendant entre une arrivée d'air (180) et une évacuation d'air (190) ;
un ensemble de piles à combustible (110) ayant une pluralité de chemins de liquide de refroidissement d'air de cathode s'étendant entre une première face (111) et une seconde face opposée (112) de l'empilement,
dans lequel l'empilement de piles à combustible est monté à l'intérieur de l'enceinte pour fournir un premier volume d'air en pointe (140) entre la première face (111) de l'empilement et une première paroi latérale (121) de l'enceinte et un second volume d'air en pointe (150) entre la seconde face (112) de l'empilement et une seconde paroi latérale opposée (122) de l'enceinte, et
un ensemble de déflecteurs d'air (1510a, 1510b) disposés entre l'arrivée d'air (1080) et une première face (1011) de l'empilement de piles à combustible ;
dans lequel l'ensemble de déflecteurs d'air comprend une pluralité d'aubes (1211) agencées pour diriger l'air vers une ou plusieurs parties de la face d'arrivée (1011) de l'empilement de piles à combustible (1010) ; et
dans lequel la pluralité d'aubes (1211) sont agencées sous forme d'un ou plusieurs ensembles de déflecteurs d'air rotatifs (1510a, b) configurés pour tourner en réponse à un écoulement d'air à travers l'arrivée d'air (1080) afin d'augmenter la turbulence dans le volume d'arrivée d'air en pointe (1040).

2. Ensemble de piles à combustible selon la revendication 1, dans lequel des bords diagonalement opposés de l'empilement (110) sont scellés contre les première et seconde parois latérales opposées respectives de l'enceinte (120).

3. Ensemble de piles à combustible selon la revendication 1, dans lequel l'enceinte comprend un filtre à air d'arrivée (185) au niveau d'une première extrémité du chemin d'écoulement d'air et un échappement d'air (190) au niveau d'une seconde extrémité opposée.

4. Ensemble de piles à combustible selon la revendication 3, comprenant une section en pointe décroissante (145) s'étendant du filtre à air d'arrivée (185) jusqu'au premier volume d'air en pointe (140).

5. Ensemble de piles à combustible selon la revendication 3 ou la revendication 4, comprenant une section en pointe croissante (155) s'étendant du second volume d'air en pointe (150) jusqu'à l'échappement d'air (190).

6. Ensemble de piles à combustible selon l'une quelconque des revendications 3 à 5, comprenant un ventilateur (195) disposé au niveau de l'échappement d'air (190) pour aspirer l'air à travers le chemin d'écoulement d'air.

7. Ensemble de piles à combustible selon l'une quelconque des revendications 1 à 6, dans lequel l'enceinte a une forme externe sensiblement cubique.

8. Ensemble de piles à combustible selon l'une quelconque des revendications précédentes, dans lequel l'empilement de piles à combustible est monté en formant un angle entre 5 et 45 degrés avec un axe longitudinal de l'enceinte.

9. Ensemble de piles à combustible selon l'une quelconque des revendications 1 à 7, dans lequel l'empilement de piles à combustible comprend une matrice en quinconce de piles à combustible planes entre des plaques d'extrémités opposées décalées latéralement l'une de l'autre.

10. Ensemble de piles à combustible selon l'une quelconque des revendications 1 à 7, dans lequel l'empilement de piles à combustible a une forme en coupe en forme de parallélogramme.

11. Ensemble de piles à combustible selon l'une quelconque des revendications précédentes, comprenant une conduite de recirculation d'air (1092) s'étendant entre l'évacuation d'air (1090) et l'arrivée d'air (1080), l'ensemble comprenant une chicane rétractable (1091) adjacente à l'évacuation d'air (1090), la chicane (1091) étant opérationnelle entre une position fermée et une position ouverte dans laquelle une proportion d'air passant à travers le second volume d'air en pointe (1050) est renvoyée vers l'arrivée d'air (1080) via la conduite de recirculation (1092).

12. Ensemble modulaire de piles à combustible comprenant une pluralité d'ensembles de piles à combustible selon l'une quelconque des revendications 1 à 11, agencés en une matrice régulière, la matrice étant facultativement une matrice rectangulaire.
